# EUROPÄISCHE PATENTSCHRIFT

(11) **EP 0 355 773 B1**
(45) Veröffentlichungstag und Bekanntmachung des Hinweises auf die Patenterteilung: **08.06.1994**
(21) Anmeldenummer: 89115391.8
(22) Anmeldetag: 21.08.1989
(51) Int. Cl.: C12G 3/12, C12F 1/00

(54) **Verfahren und Vorrichtung zur Verringerung bzw. Beseitigung von Schadstoffen während der Gewinnung von Branntwein aus vornehmlich Steinobst**
Process and device for reducing or removing toxic matter during the preparation of stone fruit brandy in particular
Préparation et appareil pour diminuer, respectivement pour enlever des produits toxiques durant la préparation de l'eau-de-vie de fruits à noyau

(30) Priorität: 20.08.1988 DE 3828320; 17.05.1989 DE 8906105 U
(43) Veröffentlichungstag der Anmeldung: 28.02.1990
(73) Patentinhaber: Kothe, Ulrich, D-73054 Eislingen (DE)
(72) Erfinder: Kothe, Ulrich, D-73054 Eislingen (DE)
(74) Vertreter: Seemann, Norbert W., Dipl.-Ing.

(56) Entgegenhaltungen:
- EP-A- 0 243 535
- EP-A- 0 343 260
- DE-U- 8 810 551
- PATENT ABSTRACTS OF JAPAN, Band 9, Nr. 17 (C-262)[1740], 24. Januar 1985#
- SCHWEIZ. ZEITSCHRIFT FÜR OBST- UND WEINBAU, Band, 123, 1987; E. RITZMANN et al., Seiten 595-597#

## Beschreibung

Die Erfindung bezieht sich nach dem Oberbegriff des Hauptanspruches auf eine Destillationsvorrichtung zur Verringerung bzw. Beseitigung von Schadstoffen während der Gewinnung von Branntwein aus vornehmlich Steinobst unter Verwendung eines Katalysators mit überdimensional großer Oberfläche im Geistdämpfestrom sowie auf ein entsprechendes Verfahren.

Aus der EP-A-0 343 260 ist es bereits bekannt, ein möglichst schadstoffreies, also keinerlei Urethankarbamat oder Cyanide enthaltendes Destillat dadurch zu gewinnen, daß man zwischen dem obersten Verstärkerboden und dem Dephlegmator ein aus mehreren durchbrochenen Metallplatten bestehendes Absorberpaket als eine Art Katalysator anordnet. Letzteres erbringt aufgrund seiner überdimensional großen Oberfläche bereits eine gegenüber herkömmlichen Brennereigeräten verbessertes Brennergebnis, jedoch deshalb nicht das gewünschte, schadstoffreie Destillat, weil sich seine bauliche Anordnung direkt im sogenannten Aromator als unzureichend erwiesen hat.

Aufgabe der vorliegenden Erfindung ist es daher, möglichst schadstoffreies Destillat durch ein gegenüber dem Stand der Technik geändertes Arbeitsverfahren mit entsprechender Vorrichtung zu erzielen.

Gelöst wird diese Aufgabe durch die aus den Patentansprüchen ersichtlichen Mittel und Maßnahmen.

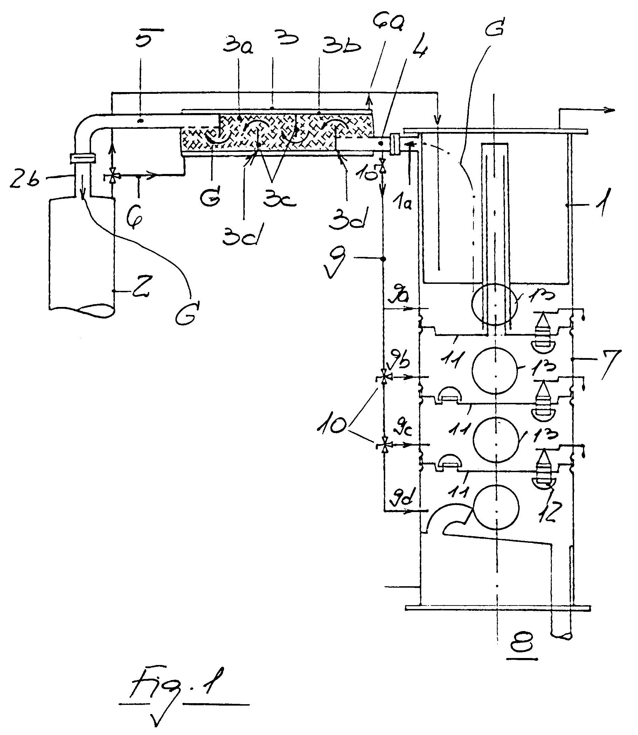

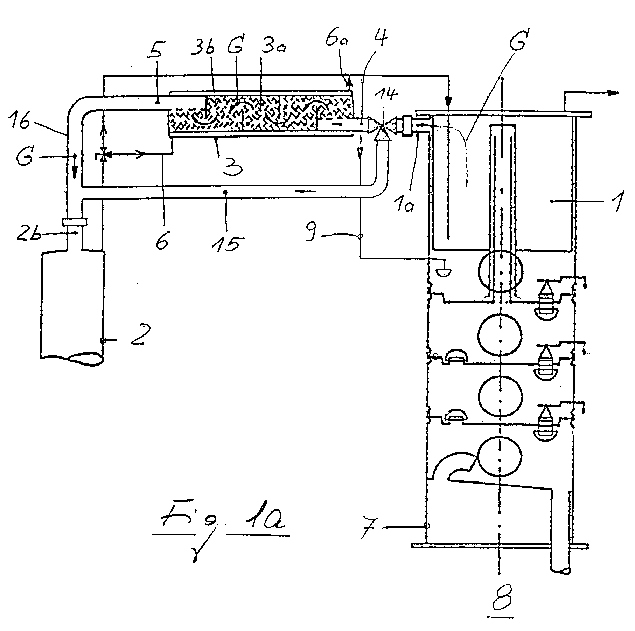

Die Zeichnungen zeigen dabei weitestgehend schematisch im Schnitt in Fig. 1 den oberen Bereich eines üblichen Brennereigerätes mit der neuen Vorrichtung,
- Fig. 1a: eine spezielle Einbauanordnung im Gesamtsystem und
- Fig. 2: eine Alternative zu Fig. 1.

Das anmeldegemäße Verfahren arbeitet generell in der Weise, daß die Geistdämpfe "G" nach Verlassen des Dephlegmators 1 und vor Eintritt in den Kühler 2 durch einen metallische Formteile 3a aufweisenden Katalysator 3 geleitet werden, wobei letzterer mit Kühlwasser beaufschlagt wird und der dabei ausfallende, mit den Schadstoffen angereicherte Lutter beispielsweise zu unterschiedlichen Stellen des Aromators 7 bzw. direkt zur Maischeblase 8 wahlweise rückführbar sein kann. Vorrichtungsmäßig ist es dabei erfindungswesentlich, daß der metallische Formteile enthaltende Katalysator außerhalb des Aromators angeordnet und dem Kühler unmittelbar vorgeschaltet ist, wobei dieser einen bodenseitigen Geistdämpfeeintrittsstutzen 4 und einen kopfseitigen Geistdämpfeaustrittsstutzen 5 aufweist und Rückführleitungen 9, 9a - 9d für den im Katalysastor ausfallenden Lutter vorgesehen sind.
Durch ein derartiges Verfahren incl. der speziellen Vorrichtung läuft während der Destillation von vor allem Steinobstmaische eine chemische Reaktion ab, die vor allem zur Reduzierung von Urethankarbamat führt.

Darüber hinaus bewirkt ein den Katalysator umgebender, von Kühlwasser durchflossener Ringmantel 3b eine zusätzliche, vorzugsweise steuerbare Kühlung des Katalysators, die eine Rektifikation hervorruft. Der ausfallende, mit den Schadstoffen angereicherte Lutter kann an beliebigen Stellen des Aromators wieder auf die Siedeböden 11 aufgegeben oder direkt über die Abzweigung 9d zur Maischeblase zurückgeleitet werden.

In spezieller baulicher Ausgestaltung ist zudem noch vorgesehen, daß die lose Schüttung metallischer Formteile aus kupfernen Teilen besteht, im wesentlichen waagerecht angeordnet ist und in seinem rohrförmigen Inneren Umlenkbleche 3c für die Geistdämpfe G aufweist. Der Ringmantel, der bodenseitige Geistdämpfeeintrittsstutzen und kopfseitige Geistdämpfeaustrittsstutzen und der Katalysator bilden vorteilhaft ein gemeinsames Bauteil.

Die Vorteile dieser Ausführung liegen in der Möglichkeit der leichten Reinigung des Katalysators und vor allem noch darin, daß alle vorhandenen Destillationsanlagen in einfachster Weise auf das neue System umrüstbar sind.

Eine weitere vorteilhafte Anordnung des zuvor beschriebenen Katalysators in seinem Anwendungsbereich, in dem alle Verunreinigungen während des Betriebs vermieden werden, zeigt Fig. 1a. Hierbei ist außerhalb von Aromator und Dephlegmator in der Verbindungsleitung 16 zum Kühler ein erfindungsgemäßer rohrförmiger Katalysator angeordnet. Bedeutsam bei dieser Ausführung ist nun, daß dem Geistdämpfeeintrittsstutzen des Katalysators ein steuerbares Dreiwegeventil 14 vorgeschaltet ist, welches gemäß dieser Figur im Bereich des Geistdämpfeaustrittsstutzens 1a des Dephlegmators angeordnet ist. Hierdurch besteht nun die Möglichkeit, über die Bypassleitung 15 den sogenannten Vor- und Nachlauf am Katalysator vorbeizuleiten und diesen somit für den Mittellauf von Verunreinigungen freizuhalten.

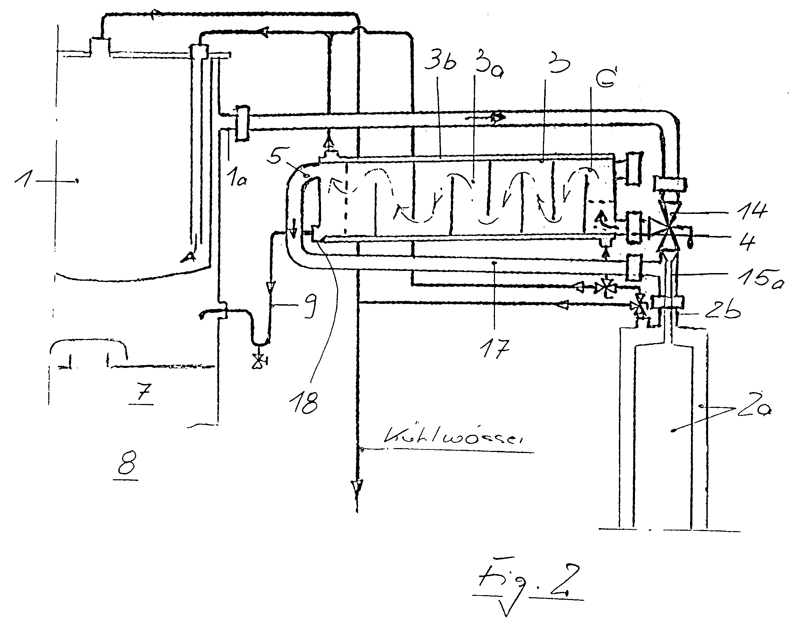

Das Ausführungsbeispiel nach Fig. 2 zeigt alternativ hierzu noch eine bauliche Anordnung, bei der das Dreiwegeventil im Bereich des Geistdämpfeeintrittsstutzen 2b des Kühlers angeordnet ist; diese Bauform gleicher Wirkung eignet sich vor allem für die Nachrüstung bereits bestehender Destillations-Anlagen und ergibt eine gute Zugänglichkeit für Montage, Bedienung und Wartung.

Ein weiterer Vorteil dieser Lösung gemäß Fig. 2 liegt noch darin, daß hier der austretende Lutter im Gleichstrom mit den Geistdämpfen G aus dem Auslaß 18 des Katalysators aus- und in den Aromator zurückfließen kann. Dienlich hierzu ist dabei noch, daß der Katalysator zum Geistdämpfeaustrittsstutzen hin geneigt zur Horizontalen liegt. Das gesamte System ist letztlich noch von besonderer Bedeutung bei Zuordnung von Katalysator und Dreiwegeventil samt Bypassleitung 15a zu einem Doppelkühler 2a.

### BEZUGSZIFFERNVERZEICHNIS

- 1: Dephlegmator
- 1a: Geistdämpfeaustrittsstutzen des Dephlegmators
- 2: Kühler
- 2a: Doppelkühler
- 2b: Geistdämpfeintrittsstutzen des Kühlers
- 3: Katalysator
- 3a: metallische Formteile
- 3b: Ringmantel
- 3c: Umlenkblech
- 3d: Durchlaß
- 4: Geistdämpfeeintrittsstutzen
- 5: Geistdämpfeaustrittsstutzen
- 6: Kühlwasserzulauf
- 6a: Kühlwasserrücklauf
- 7: Aromator
- 8: Maischeblase
- 9: Rückführleitung
- 9a - 9d: Abzweigungen der Rückführleitung
- 10: Umschaltventil
- 11: Siedeboden
- 12: Rücklaufsyphon
- 13: Schauglas
- 14: Dreiwegeventil
- 15, 15a: Bypassleitungen
- 16, 17: Verbindungsleitung
- 18: Auslaß
- G: Geistdämpfe

## Patentansprüche

1. Destillationsvorrichtung, bestehend aus Maischeblase, Aromator, Dephlegmator und Kühler einschließlich diese Elemente verbindende Leitungen,
**dadurch gekennzeichnet,**
daß ein zwischen dem Dephlegmator (1) und dem Kühler (2, 2a) angeordneter Katalysator (3) eine lose Schüttung metallischer Formteile (3a) sowie einen bodenseitig in den Katalysator einmündenden Geistdämpfeeintrittsstutzen (4) und einen kopfseitig aus diesen führenden Geistdämpfeaustrittsstutzen (5) aufweist und daß Rückführleitungen (9, 9a - 9d) vorgesehen sind, mit denen der im Katalysator ausfallende, mit den Schadstoffen angereicherte Lutter zu unterschiedlichen Stellen des Aromators (7) bzw. direkt zur Maischeblase (8) wahlweise rückführbar ist.

2. Vorrichtung nach Anspruch 1,
**dadurch gekennzeichnet,**
daß der Katalysator rohrförmig ausgebildet ist und in seinem rohrförmigen Inneren Umlenkbleche (3c) für die Geistdämpfe (G) aufweist.

3. Vorrichtung nach einem der Ansprüche 1 und 2,
**dadurch gekennzeichnet,**
daß der Katalysator einen von Kühlwasser durchflossenen Ringmantel (3b) aufweist, und zusammen mit diesem sowie dem Geistdämpfeeintrittsstutzen und dem Geistdämpfeaustrittsstuten eine bauliche Einheit bildet.

4. Vorrichtung nach einem der Ansprüche 1 bis 3,
**dadurch gekennzeichnet,**
daß der Katalysator eine lose Schüttung von kupfernen Formteilen aufweist.

5. Vorrichtung nach einem der Ansprüche 1 bis 4,
**dadurch gekennzeichnet,**
daß der Katalysator waagerecht angeordnet ist.

6. Vorrichtung nach einem der vorhergehenden Ansprüche,
**dadurch gekennzeichnet,**
daß ein dem Geistdämpfeaustrittsstutzen nachgeordnetes steuerbares Dreiwegeventil (14) dem Geistdämpfeeintrittsstutzen des Katalysators vorgeschaltet sowie über Bypassleitungen (15 bzw. 15a) mit dem Geistdämpfeeintrittsstutzen (2b) eines Kühlers bzw. eines Doppelkühlers (2a) verbunden ist.

7. Vorrichtung nach Anspruch 6,
**dadurch gekennzeichnet,**
daß das Dreiwegeventil im Bereich des Geistdämpfeaustrittsstutzens (1a) des Dephlegmators angeordnet ist.

8. Vorrichtung nach Anspruch 6,
**dadurch gekennzeichnet,**
daß das Dreiwegeventil im Bereich des Geistdämpfeeintrittsstutzens des Kühlers angeordnet ist.

9. Vorrichtung nach einem der Ansprüche 6 und 8,
**dadurch gekennzeichnet,**
daß der Katalysator zum Geistdämpfeaustrittsstutzen hin geneigt zur Horizontalen liegt.

10. Verfahren zur Verringerung bzw. Beseitigung von Schadstoffen während der Destillation von Branntwein, insbesondere von Steinobst, unter Verwendung einer Vorrichtung nach einem der vorhergehenden Ansprüche,
**dadurch gekennzeichnet,**
daß die Geistdämpfe (G) nach Verlassen des Dephlegmators (1) und vor dem Eintritt in den Kühler (2, 2a) durch einen, eine lose Schüttung metallischer Formteile (3a) sowie einen bodenseitigen Geistdämpfeeintrittsstutzen (4) und einen kopfseitigen Geistdämpfeaustrittsstutzen (5) aufweisenden Katalysator (3) geleitet werden, wobei das mit den Schadstoffen angereicherte Lutter zu unterschiedlichen Stellen des Aromators (7) bzw. direkt zur Maischeblase (8) wahlweise rückgeführt wird.

## Claims

1. Distillation device, consisting of must still, aromatiser, dephlegmator and condenser inclusive of ducts connecting these elements, characterised thereby that a catalyser (3) arranged between the dephlegmator (1) and the condenser (2, 2a) comprises a loose filling of metallic shaped bodies (3a) as well as a vapour extract inlet stub pipe (4) opening into the catalyser at the base side and a spirit vapour outlet stub pipe (5) leading out of this at the head side, and that return ducts (9, 9a to 9d) are provided, by which the singlings enriched with contaminants and separating out in the catalyser are selectably returnable and to different places of the aromatiser (7) or directly to the must still (8).

2. Device according to claim 1, characterised thereby that the catalyser is constructed to be tubular and has baffle plates (3c) for the spirit vapour (G) in its tubular interior.

3. Device according to one of claims 1 and 2, characterised thereby that the catalyser has an annular jacket (3b) flowed through by cooling water, and forms a constructional unit with this as well as with the spirit vapour inlet stub pipe and the spirit vapour outlet stub pipe.

4. Device according to one of claims 1 to 3, characterised thereby that the catalyser has a loose filling of copper shaped bodies.

5. Device according to one of claims 1 to 4, characterised thereby that the catalyser is arranged horizontally.

6. Device according to one of the preceding claims, characterised thereby that a controllable three-way valve (14) arranged downstream of the spirit vapour outlet stub pipe is connected upstream of the spirit vapour inlet stub pipe of the catalyser and is connected by way of bypass ducts (15 or 15a) with the spirit vapour inlet stub pipe (2b) of a condenser or of a double condenser (2a).

7. Device according to claim 6, characterised thereby that the three-way valve is arranged in the region of the spirit vapour outlet stub pipe (1a) of the dephlegmator.

8. Device according to claim 6, characterised thereby that the three-way valve is arranged in the region of the spirit vapour inlet stub pipe of the condenser.

9. Device according to one of claims 6 and 8, characterised thereby that the catalyser is inclined relative to the horizontal towards the spiral vapour outlet stub pipe.

10. Process for reduction in or elimination of contaminants during distillation of spirits, especially of stone fruit, with use of a device according to one of the preceding claims, characterised thereby that the spirit vapours (G) after leaving the dephlegmator (1) and before entry into the condenser (2, 2a) are conducted through a catalyser (3) comprising a loose fitting of metallic shaped bodies (3a) as well as a spirit vapour inlet stub pipe (4) at the base side and a spirit vapour outlet stub pipe (5) at the head side, wherein the singlings enriched with contaminants are selectably returned to different places of the aromatiser (7) or directly to the must still (8).

## Revendications

1. Dispositif de distillation, composé d'une cucurbite à moût, d'un dispositif d'aromatisation, d'un déflegmateur et d'un refroidisseur, y compris des conduites qui relient ces éléments, caractérisé par le fait qu'un dispositif catalytique (3) disposé entre le déflegmateur (1) et le refroidisseur (2, 2a) comporte un remplissage en vrac de pièces métalliques mises en forme (3a), ainsi qu'une tubulure d'entrée des vapeurs d'alcool (4) qui débouche dans le dispositif catalytique du côté de son fond et une tubulure de sortie des vapeurs d'alcool (5) qui sort du côté supérieur de celui-ci, et par le fait qu'il est prévu des conduites de retour (9, 9a à 9d) au moyen desquelles la blanquette qui se dépose dans le catalyseur et qui est enrichie en produits toxiques peut être renvoyée au choix vers des endroits différents du dispositif d'aromatisation (7) ou, respectivement, directement à la cucurbite à moût (8).

2. Dispositif selon la revendication 1, caractérisé par le fait que le dispositif catalytique est réalisé en forme de tube, et qu'il comporte dans son volume intérieur tubulaire des tôles (3c) de déflexion des vapeurs d'alcool (G).

3. Dispositif selon l'une des revendications 1 et 2, caractérisé par le fait que le dispositif catalytique comporte une enveloppe annulaire (3b) traversée par de l'eau de refroidissement, et qu'il forme par construction un ensemble avec cette enveloppe, avec la tubulure d'entrée des vapeurs d'alcool et avec la tubulure de sortie des vapeurs d'alcool.

4. Dispositif selon l'une des revendications 1 à 3, caractérisé par le fait que le dispositif catalytique comporte un remplissage en vrac de pièces en cuivre mises en forme.

5. Dispositif selon l'une des revendications 1 à 4, caractérisé par le fait que le dispositif catalytique est disposé horizontalement.

6. Dispositif selon l'une des revendications précédentes, caractérisé par le fait qu'une valve à trois voies (14) asservie qui est disposée en aval de la tubulure de sortie des vapeurs d'alcool est montée en amont de la tubulure d'entrée des vapeurs d'alcool du dispositif catalytique, et qu'elle est reliée par l'intermédiaire de conduites de dérivation (15, respectivement 15a) à la tubulure (2b) d'entrée des vapeurs d'alcool d'un refroidisseur ou, respectivement, d'un refroidisseur double (2a).

7. Dispositif selon la revendication 6, caractérisé par le fait que la valve à trois voies est disposée dans la région de la tubulure (1a) de sortie des vapeurs d'alcool du déflegmateur.

8. Dispositif selon la revendication 6, caractérisé par le fait que la valve à trois voies est disposée dans la région de la tubulure d'entrée des vapeurs d'alcool du refroidisseur.

9. Dispositif selon l'une des revendications 6 et 8, caractérisé par le fait que le dispositif catalytique est incliné vers le bas par rapport à l'horizontale dans la direction de la tubulure de sortie des vapeurs d'alcool.

10. Procédé pour diminuer les produits toxiques ou pour les supprimer, respectivement, pendant la distillation d'eau-de-vie, en particulier de fruits à noyaux, en utilisant un dispositif selon l'une des revendications précédentes, caractérisé par le fait que les vapeurs d'alcool (G), après avoir quitté le déflegmateur (1) et avant d'entrer dans le refroidisseur (2, 2a), sont amenées à travers un dispositif catalytique (3) qui comporte un remplissage en vrac de pièces métalliques mises en forme (3a), ainsi qu'une tubulure (4) d'entrée des vapeurs d'alcool située du côté du fond et une tubulure de sortie des vapeurs d'alcool (5) située du côté supérieur, cependant que la blanquette enrichie en produits toxiques peut être renvoyée au choix vers des endroits différents du dispositif d'aromatisation (7) ou, respectivement, directement à la cucurbite à moût (8).
